# EUROPEAN PATENT SPECIFICATION

(11) **EP 3 118 959 B1**
(45) Date of publication and mention of the grant of the patent: **07.11.2018**
(21) Application number: 16177337.9
(22) Date of filing: 30.06.2016
(51) Int. Cl.: H02M 1/44, H02J 1/10, H02M 1/00

(54) **POWER CONVERSION DEVICE AND AIR CONDITIONER**
LEISTUNGSUMWANDLUNGSVORRICHTUNG UND KLIMAANLAGE
DISPOSITIF DE CONVERSION DE PUISSANCE ET CONDITIONNEUR D'AIR

(30) Priority: 14.07.2015 JP 2015140280
(43) Date of publication of application: 18.01.2017
(73) Proprietor: MITSUBISHI HEAVY INDUSTRIES, LTD., Tokyo (JP)
(72) Inventor: SUMIYA, Atsuyuki, TOKYO (JP); HIROSE, Masaki, TOKYO (JP); OONO, Kenzo, TOKYO (JP)
(74) Representative: Healy, Erwan

(56) References cited:
- EP-A2- 1 478 072
- US-A- 5 990 575
- US-A1- 2006 255 753
- US-A1- 2015 180 411

## Description

### BACKGROUND OF THE INVENTION

### Field of the Invention

The present invention relates to a power conversion device and an air conditioner.

### Description of Related Art

In recent years, opportunities to mount a number of power devices (switching elements) on one controller have increased in accordance with development of highly efficient products using these power devices.

For example, an active filter (active converter) for generating DC power from a commercial power supply as a power conversion device, an inverter for generating AC power for driving a motor, and the like are mounted on an air conditioner (see Patent Document 1 to Patent Document 3). The active filter, the inverter, and the like are configured of switching elements (a power transistor) suitable for high power.

### Prior Art Documents

[Patent Document 1] Japanese Unexamined Patent Application, First Publication No. H09-065659
[Patent Document 2] Japanese Unexamined Patent Application, First Publication No. 2012-235633
[Patent Document 3] Japanese Unexamined Patent Application, First Publication No. H11-289770

### SUMMARY OF THE INVENTION

### Problems to be Solved by the Invention

The active filter, the inverter, and the like described above are controlled by a switching element control circuit for appropriately controlling turning a switching element configuring each thereof ON/OFF.

In some air conditioners, since a number of switching elements configuring the inverter, the active converter, and the like are mounted on the same substrate, switching noise is generated in accordance with ON/OFF control of each switching element. Thus, in particular, in a case in which the switching element control circuits respectively controlling each switching element drive based on the same power supply, noise is mutually propagated through power supply lines and it may be a cause of malfunction.

The invention is made in view of the above problems and an object of the invention is to provide a power conversion device, in which malfunctions due to switching noise can be reduced, and an air conditioner.

### Means for Solving the Problem

According to an aspect of the invention, a power conversion device is provided including a constant voltage output circuit that outputs a constant voltage; a switching element control circuit that drives based on the constant voltage applied from the constant voltage output circuit through power supply lines and control switching elements for performing power conversion; a diode element that is connected in a forward direction from the constant voltage output circuit to the switching element control circuit in the power supply lines; and a capacitor having one end connected between the diode elements and the switching element control circuits in the power supply lines and the other end connected to a ground.

In addition, according to an aspect of the invention, the diode element is connected to all of the power supply lines connected from the constant voltage output circuit to each of a plurality of the switching element control circuits.

In addition, according to an aspect of the invention, the diode element is also connected between the constant voltage output circuit and the switching elements to which the constant voltage is applied in a case in which the constant voltage is applied to the switching elements from the constant voltage output circuit through the power supply lines.

In addition, according to an aspect of the invention, the constant voltage output circuit is connected to a constant voltage regulating diode that is a diode element having the same characteristics as the diode element in wiring connected to the ground.

In addition, according to an aspect of the invention, an air conditioner is provided including the power conversion device according to the above description. Advantages of the Invention

According to the power conversion device and the air conditioner described above, it is possible to reduce malfunctions due to switching noise.

### BRIEF DESCRIPTION OF THE DRAWINGS

FIG. 1 is a diagram illustrating an entire configuration of a power conversion device according to a first embodiment.
FIG. 2 is a diagram illustrating a configuration of a control section according to the first embodiment.
FIG. 3 is a first diagram describing operational effects of the control section according to the first embodiment.
FIG. 4 is a second diagram describing the operational effects of the control section according to the first embodiment.

### DETAILED DESCRIPTION OF THE INVENTION

### <First Embodiment>

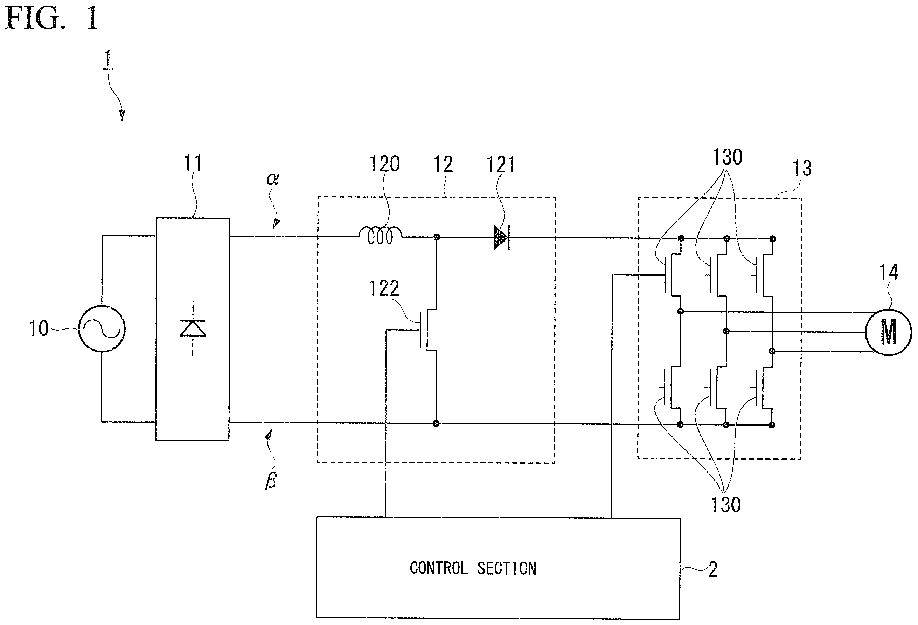

Hereinafter, a power conversion device according to a first embodiment will be described with reference to FIGS. 1 to 4.

### (Entire Configuration)

FIG. 1 is a diagram illustrating an entire configuration of the power conversion device according to the first embodiment.

A power conversion device 1 according to the embodiment is mounted on an air conditioner. The power conversion device 1 converts AC power from commercial power supply and generates power for driving a motor of a compressor in accordance with an operating state of the air conditioner.

As illustrated in FIG. 1, the power conversion device 1 includes an AC power supply 10, a rectifier circuit 11, an active filter 12, an inverter 13, a motor 14, and a control section 2.

The AC power supply 10 is a commercial power supply and, for example, outputs AC power of frequency of 50 Hz (60 Hz) and AC 200 V.

The rectifier circuit 11 is a rectifier circuit configured of diode elements that are bridge-connected. The rectifier circuit 11 converts AC power input from the AC power supply 10 into DC power. The rectifier circuit 11 outputs a constant high potential to a high potential line α a constant low potential (typically ground potential) to a low potential line.

The active filter 12 reduces harmonic noise superimposed on DC power output from the rectifier circuit 11.

Specifically, as illustrated in FIG. 1, the active filter 12 is configured of an inductor 120, an active filter diode element 121, and a switching element 122. The active filter 12 functions as a filter for suppressing a harmonic component of DC power output from the rectifier circuit 11 by appropriately controlling the switching element 122 connected between the high potential line α and a low potential line β by a control section 2 described below.

Moreover, the switching element 122 (and a switching element 130 described below) is a power transistor that can be applied to a high power output (high voltage and high current) and, for example, is generationally a Field Effect Transistor (FET), an Insulated Gate Bipolar Transistor (IGBT), and the like.

The inverter 13 converts DC power output from the rectifier circuit 11 into three-phase AC power for driving the motor 14 and outputs three-phase AC power. Specifically, as illustrated in FIG. 1, the inverter 13 is configured of six switching elements 130. The inverter 13 is configured such that three sets of the switching elements 130 are connected in parallel between the high potential line α and the low potential line β, and each set of the switching elements 130 outputs AC power corresponding to each phase (U phase, V phase, and W phase) of three-phase AC power.

The motor 14 generates power (rotational force) with a torque and a rotational speed in accordance with three-phase AC power output from the inverter 13. A compressor is driven by the rotational force generated by the motor 14 and a basic function as the air conditioner is exhibited.

The control section 2 is responsible for an entire operation of the power conversion device 1.

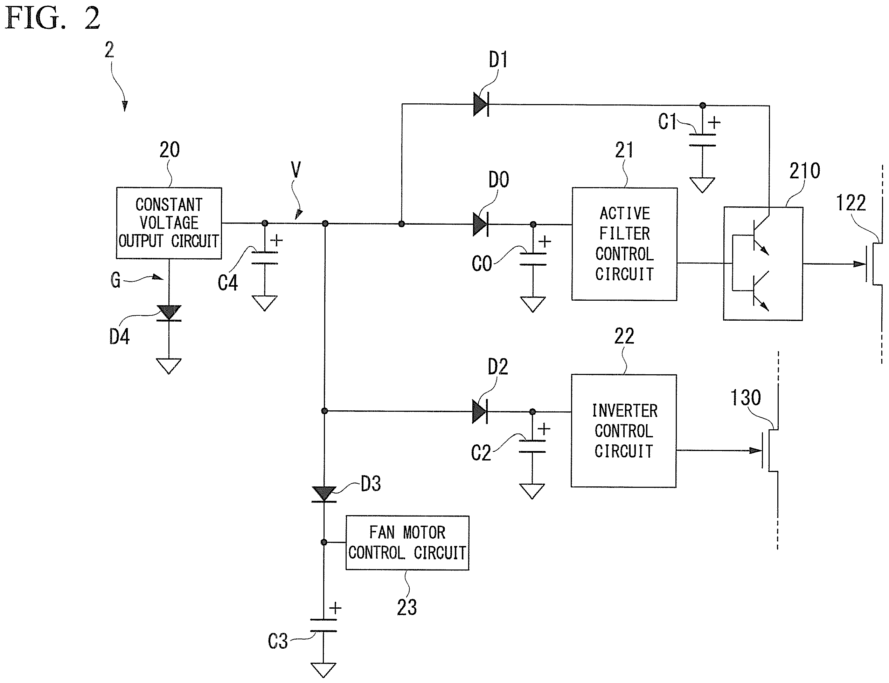

Specifically, the control section 2 appropriately controls turning the switching elements 122 and 130 ON/OFF in accordance with acquired detection values while incorporating various detection values (voltage and current) in the high potential line α and the low potential line β. An aspect of the control section 2 will be described in detail with reference to FIG. 2.

### (Configuration of Control Section)

FIG. 2 is a diagram illustrating a configuration of the control section according to the first embodiment.

As illustrated in FIG. 2, the control section 2 includes a constant voltage output circuit 20, an active filter control circuit 21, a control switching element 210, an inverter control circuit 22, and a fan motor control circuit 23.

In addition, as illustrated in FIG. 2, diode elements D0 to D3, a constant voltage regulating diode element D4, and capacitors C0 to C4 are connected to various circuits configuring the control section 2.

The constant voltage output circuit 20 is a regulator and outputs a constant voltage (power supply voltage) for operating various circuits (active filter control circuit 21, the control switching element 210, the inverter control circuit 22, and the fan motor control circuit 23) described below.

The constant voltage output circuit 20 outputs, for example, the constant voltage of DC 15 V. The constant voltage output from the constant voltage output circuit 20 is supplied (applied) to the various circuits through a power supply line V.

In addition, the power supply line V is branched from the constant voltage output circuit 20 and is connected to each of the various circuits.

The active filter control circuit 21 is a switching element control circuit controlling the active filter 12 (FIG. 1). Specifically, the active filter control circuit 21 controls the switching element 122 of the active filter 12 in accordance with the detection value (sampling value) while detecting a voltage (current) in each wiring (high potential line α, the low potential line β, and the like) of the power conversion device 1. Here, the active filter control circuit 21 controls turning the switching element 122 ON/OFF with, for example, a frequency of approximately 30 kHz.

The active filter diode element 21 drives based on the constant voltage of DC 15 V applied through the power supply line V.

The active filter 12 controls the switching element 122 via the control switching element 210. Here, the control switching element 210 is a switching element that drives based on the active filter control circuit 21. Similarly, the control switching element 210 drives based on the constant voltage of DC 15 V applied through the power supply line V.

The inverter control circuit 22 is a switching element control circuit controlling the inverter 13 (FIG. 1). Specifically, the inverter control circuit 22 controls six switching elements 130 (see FIG. 1) configuring the inverter 13 and generates each phase (U phase, V phase, and W phase) of three-phase AC power.

Here, the inverter control circuit 22 independently controls each of the switching elements 130 configuring the inverter 13 while response to a detection value of a voltage (current) in each wiring (high potential line α, the low potential line β, and the like) of the power conversion device 1. Therefore, a torque, rotational speed of the motor 14 (see FIG. 1), and the like are appropriately regulated in accordance with a driving state of the air conditioner. The inverter control circuit 22 controls turning each switching element 130 ON/OFF with, for example, a frequency of 4.5 kHz.

Similarly, the inverter control circuit 22 drives based on the constant voltage of DC 15 V applied through the power supply line V.

The fan motor control circuit 23 is a switching element control circuit controlling a fan motor (not illustrated in FIGS. 1 and 2). Specifically, the fan motor control circuit 23 controls rotation of the fan motor by controlling a switching element

(not illustrated in FIGS. 1 and 2) for controlling rotation of the fan motor.

Similarly, the fan motor control circuit 23 drives based on the constant voltage of DC 15 V applied through the power supply line V.

Moreover, a configuration of the switching element controlling the rotation of the fan motor is similar to the inverter 13 illustrated in FIG. 1.

Next, the capacitors C0 to C4 and the diode elements D0 to D3 connected to each point of the power supply line V will be described. Moreover, in the following description, description will be made in which a side of the power supply line V closer to the constant voltage output circuit 20 is referred to as "upstream side" and a side closer to each switching element control circuit (active filter control circuit 21, the inverter control circuit 22, and the like) is referred to as "downstream side".

The capacitors C0 to C4 are smoothing capacitors provided for stabilizing the constant voltage of DC 15 V applied to the power supply line V.

As illustrated in FIG. 2, one end of the capacitor C0 is connected to the downstream side of the power supply line V connecting the constant voltage output circuit 20 and the active filter control circuit 21, and the other end thereof is connected to the ground.

In addition, one end of the capacitor C1 is connected to the downstream side of the power supply line V connecting the constant voltage output circuit 20 and the control switching element 210, and the other end thereof is connected to the ground.

In addition, one end of the capacitor C2 is connected to the downstream side of the power supply line V connecting the constant voltage output circuit 20 and the inverter control circuit 22, and the other end thereof is connected to the ground.

In addition, one end of the capacitor C3 is connected to the downstream side of the power supply line V connecting the constant voltage output circuit 20 and the fan motor control circuit 23, and the other end thereof is connected to the ground.

Then, one end of the capacitor C4 is connected to the upstream side of the power supply line V and the other end thereof is connected to the ground.

As illustrated in FIG. 2, the diode elements D0 to D3 are connected to all of the power supply line V connected from the constant voltage output circuit 20 to each of a plurality of switching element control circuits (active filter control circuit 21, the inverter control circuit 22, and the fan motor control circuit 23) and the control switching element 210.

Specifically, the diode element D0 is connected in series in a forward direction from the constant voltage output circuit 20 to the active filter control circuit 21 in the power supply line V connecting the constant voltage output circuit 20 and the active filter control circuit 21.

In addition, the diode element D1 is connected in series in the forward direction from the constant voltage output circuit 20 to the control switching element 210 in the power supply line V connecting the constant voltage output circuit 20 and the control switching element 210.

In addition, the diode element D2 is connected in series in the forward direction from the constant voltage output circuit 20 to the inverter control circuit 22 in the power supply line V connecting the constant voltage output circuit 20 and the inverter control circuit 22.

In addition, the diode element D3 is connected in series in the forward direction from the constant voltage output circuit 20 to the fan motor control circuit 23 in the power supply line V connecting the constant voltage output circuit 20 and the fan motor control circuit 23.

As illustrated in FIG. 2, the diode element D0 is connected in the power supply line V on the upstream side further than one end of the capacitor C0. In other words, one end of the capacitor C0 is connected between the diode element D0 and the active filter control circuit 21 in the power supply line V and the other end thereof is connected to the ground.

In addition, the diode element D1 is connected in the power supply line V on the upstream side further than one end of the capacitor C1. In other words, one end of the capacitor C1 is connected between the diode element D1 and the control switching element 210 in the power supply line V and the other end thereof is connected to the ground.

In addition, the diode element D2 is connected in the power supply line V on the upstream side further than one end of the capacitor C2. In other words, one end of the capacitor C2 is connected between the diode element D2 and the inverter control circuit 22 in the power supply line V and the other end thereof is connected to the ground.

In addition, the diode element D3 is connected in the power supply line V on the upstream side further than one end of the capacitor C3. In other words, one end of the capacitor C3 is connected between the diode element D3 and the fan motor control circuit 23 in the power supply line V and the other end thereof is connected to the ground.

In addition, as illustrated in FIG. 2, the constant voltage regulating diode element D4 is connected in series in wiring G connecting the constant voltage output circuit 20 and the ground. Here, the constant voltage regulating diode element D4 is connected in the forward direction from the constant voltage output circuit 20 to the ground.

The constant voltage regulating diode element D4 is a diode element having the same characteristics as the diode elements D0 to D3 connected to each point of the power supply line V.

### (Operational Effects)

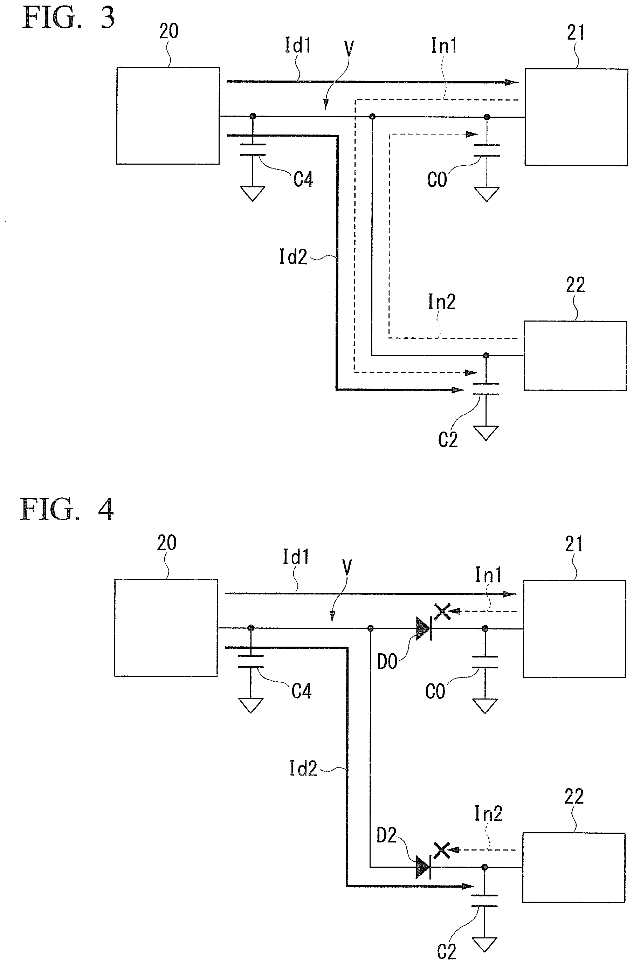

FIG. 3 is a first diagram describing operational effects of the control section according to the first embodiment.

In addition, FIG. 4 is a second diagram describing operational effects of the control section according to the first embodiment.

Specifically, FIG. 3 is a diagram describing an operation of a comparative example which does not have the diode elements D0 to D3 in the circuit configuration illustrated in FIG. 2.

In addition, FIG. 4 is a diagram describing an operation of the control section 2 which has the diode elements D0 to D3 in accordance with the circuit configuration illustrated in FIG. 2.

Moreover, in FIGS. 3 and 4, for the sake of simplicity, only the constant voltage output circuit 20, the active filter control circuit 21, the inverter control circuit 22, and the power supply line V connecting them among the circuit configuration of the control section 2 illustrated in FIG. 2 are illustrated.

Hereinafter, the operational effects will be described with reference to FIGS. 3 and 4 based on the circuit configuration (FIG. 2) of the control section 2.

As described above, the active filter control circuit 21 and the inverter control circuit 22 illustrated in FIGS. 3 and 4 control turning the switching elements (switching element 122 and the switching element 130) corresponding to each other ON/OFF with control frequencies (for example, 30 kHz, 4.5 kHz, and the like) different from each other. In this case, in general, switching noise is generated in accordance with each control frequency in the power supply line V. Moreover, the capacitors C0 to C3 are provided for the purpose of smoothing the switching noise and stably supplying the constant voltage to each switching element control circuit.

However, in a case of the circuit configuration (FIG. 3) illustrating the comparative example, the switching noise is induced due to resonance characteristics based on each capacitor connected to the power supply line V and an inductance component parasitic on the power supply line V. Therefore, it is identified that propagation and reflection of some component of the switching noise are repeated in the power supply line V.

Here, according to FIG. 3, a current id1 regularly flows from the constant voltage output circuit 20 to the active filter control circuit 21 and a current Id2 regularly flows from the constant voltage output circuit 20 to the inverter control circuit 22.

In a case of the circuit configuration of the comparative example, in addition to the regular currents Id1 and Id2 supplied from the constant voltage output circuit 20, the switching noise generated due to each operation of the active filter control circuit 21 and the inverter control circuit 22 propagates the power supply line V by being induced due to the capacitors C0 and C2, and the resonance characteristics based on the inductance component parasitic on the power supply line V.

For example, as illustrated in FIG. 3, a noise current In1 flows from the capacitor C0 to the inverter control circuit 22 and a noise current In2 flows from the capacitor C2 to the active filter control circuit 21.

As described above, a plurality of switching element control sections connected in parallel in one power supply line V generate the switching noise (noise currents In1 and In2) at independent timing. Thus, a plurality of noise components are superimposed at predetermined timing and there is a concern that strong voltage fluctuation that is not intended occurs.

Then, there is a concern that detection capability of a voltage (current) in each of switching element control circuits (active filter control circuit 21, the inverter control circuit 22, and the like) is greatly reduced and, in some cases, malfunction is caused.

In addition, in a typical power conversion device, an over-current detector for detecting occurrence of abnormality (over-current) is commonly provided, and it is conceivable that the over-current detector also malfunctions due to the voltage fluctuation described above.

In contrast, in a case of the circuit configuration (FIG. 4) of the control section 2 according to the first embodiment, the switching noise induced due to each capacitor connected to the power supply line V and the resonance characteristics based on the inductance component parasitic on the power supply line V is blocked when propagating the diode elements D0 and D2 in a reverse direction. This reverse direction blocking is generally known in the art, e,g US2006255753 or EP-A-1478072.

For example, as illustrated in FIG. 4, the noise current In1 flowing from the capacitor C0 to the inverter control circuit 22 is blocked by the diode element D0 connected in the reverse direction with respect to a feeding direction. Similarly, the noise current In2 flowing from the capacitor C2 to the active filter control circuit 21 is blocked by the diode element D2 connected in the reverse direction with respect to the feeding direction.

On the other hand, the current Id1 regularly flowing from the constant voltage output circuit 20 to the active filter control circuit 21 is not inhibited by the diode element D0. Similarly, the current Id2 regularly flowing from the constant voltage output circuit 20 to the inverter control circuit 22 is not inhibited by the diode element D2.

Next, operational effects of the constant voltage regulating diode element D4 will be described.

As illustrated in FIG. 2, the diode elements D0 to D3 are processed between the constant voltage output circuit 20, each of switching element control circuits (active filter control circuit 21, the inverter control circuit 22, and the like), and the control switching element 210. Then, voltage drop (for example, Vf=0.7 V) due to a threshold voltage Vf of the diode elements D0 to D3 is generated in the power supply line V. In this case, the constant voltage applied to each of the switching element control circuits and the like is decreased by the threshold voltage Vf of the diode elements D0 to D3. Therefore, each of the switching element control circuits and the like can cause malfunction without application of the voltage (for example, DC 15 V) to be originally applied.

Then, as illustrated in FIG. 2, the constant voltage regulating diode element D4 is connected in series in the wiring G connecting the constant voltage output circuit 20 and the ground. Therefore, the voltage of the constant voltage output circuit 20 that is designed to output the constant voltage of DC 15 V can be increase by the threshold voltage Vf of the constant voltage regulating diode element D4. Here, as described above, the constant voltage regulating diode element D4 has the same characteristics as the other diode elements D0 to D3. Then, the constant voltage output from the constant voltage output circuit 20 is increased by an amount corresponding to a voltage drop amount due to the diode elements D0 to D3. Thus, as a result, a desired constant voltage is applied to each of the switching element control circuits and the like.

As described above, the power conversion device 1 according to the first embodiment blocks the switching noise that may propagate each power supply line V due to a resonance phenomenon with the diode elements D0 to D3 which are connected to each of the switching element control circuits (and the control switching element 210) corresponding thereto.

Therefore, the switching noise is reduced and it is possible to reduce malfunction due to the switching noise. Particularly, in the active filter 12, since detection performance of a voltage and a current in the active filter control circuit 21 is improved, harmonic suppression performance is improved.

In addition, for example, as the control switching element 210, in a case in which the switching element applies the constant voltage from the constant voltage output circuit 20 through the power supply line V, the diode element (diode element D1) is also connected between the constant voltage output circuit 20 and the switching element (control switching element 210) applying the constant voltage.

Since the switching element itself connected to the power supply line V is also a noise source, it is possible to further reduce the switching noise by doing so.

### <Modification Example of First Embodiment>

Above, the power conversion device 1 according to the first embodiment is described in detail, but a specific aspect of the power conversion device 1 is not limited to the above description, and it is possible to add various design modifications and the like within a scope not departing from the gist.

For example, in the constant voltage output circuit 20 according to the first embodiment, an aspect, in which the constant voltage is appropriately regulated by connecting the constant voltage regulating diode element D4 in the wiring G connecting the constant voltage output circuit 20 and the ground, is provided, but it is not limited to the aspect in another embodiments.

For example, in a constant voltage output circuit 20 according to another embodiment, an aspect, in which a resistance element having a resistance value that causes voltage drop corresponding to a threshold voltage Vf of diode elements D0 to D3 or a circuit element similar thereto is connected to wiring G, may be provided.

In addition, in the power conversion device 1 according to the first embodiment, an aspect, in which the diode elements D0 to D3 and the capacitors C0 to C3 corresponding to all of the switching element control circuits connected to the power supply line V and the switching element (control switching element 210) connected to the same power supply line V are provided, is described, but it is not limited to the aspect in another embodiments.

That is, in another embodiment, if effects to reduce switching noise is within a desired range, the diode elements D0 to D3 and the capacitors C0 to C3 corresponding to all of the switching element control circuits and the switching elements connected to the power supply line V may not be necessarily provided.

In the power conversion device 1 according to the first embodiment, an aspect (see FIG. 2), in which the active filter control circuit 21, the inverter control circuit 22, and the fan motor control circuit 23 are provided as the switching element control circuits, is described, but it is not limited to the aspect in another embodiments.

That is, in another embodiment, an aspect, in which a power conversion device 1 does not include any one or a plurality of an active filter control circuit 21, an inverter control circuit 22, and a fan motor control circuit 23, may be provided. In contrast, an aspect, in which switching element control circuits other than the active filter control circuit 21, the inverter control circuit 22, and the fan motor control circuit 23 are included, may be provided.

Above, several embodiments of the invention are described, but these embodiments are presented by way of example and are not intended to limit the scope of the invention. These embodiments can be embodied in other various forms and various omissions, replacements, and changes can be performed in a range without departing from the scope of the invention. These embodiments and modifications thereof fall within the scope and spirit of the invention, and fall within the invention described in the claims and the scope of equivalents thereof.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

### EXPLANATION OF REFERENCES

1 power conversion device
10 AC power supply
11 rectifier circuit
12 active filter
120 inductor
121 active filter diode element
122 switching element
13 inverter
130 switching element
14 motor
2 control section
20 constant voltage output circuit
21 active filter control circuit (switching element control circuit)
210 control switching element (switching element)
22 inverter control circuit (switching element control circuit)
23 fan motor control circuit (switching element control circuit)
C0, C1, C2, C3, C4 capacitor
D0, D1, D2, D3 diode element
D4 constant voltage regulating diode element
V power supply line
G wiring
α high potential line
β low potential line

## Claims

1. A power conversion device (1) comprising:
a constant voltage output circuit (20) that outputs a constant voltage;
a switching element control circuit (21) that drives based on the constant voltage applied from the constant voltage output circuit (20) through power supply lines and control switching elements (210) for performing power conversion;
a diode element (DO) that is connected in a forward direction from the constant voltage output circuit (20) to the switching element control circuit (21) in the power supply lines; and
a capacitor (CO) having one end connected between the diode element and the switching element control circuit (21) in the power supply lines and the other end connected to a ground, **characterized in that** the constant voltage output circuit (20) is connected to a constant voltage regulating diode (D4) that is a diode element having the same characteristics as the diode element (DO) in wiring connected to the ground.

2. The power conversion device according to claim 1,
comprising another switching element control circuit (22), and
wherein each of the plurality of the switching element control circuits (21, 22) includes the diode element (DO) which is connected to the power supply lines connected from the constant voltage output circuit (20) to each of the plurality of the switching element control circuits (21, 22).

3. The power conversion device according to claim 1 or 2,
wherein the diode element is also connected between the constant voltage output circuit (20) and the switching elements to which the constant voltage is applied in a case in which the constant voltage is applied to the switching elements from the constant voltage output circuit (20) through the power supply lines.

4. An air conditioner comprising:
the power conversion device according to any one of claims 1 to 3.

## Patentansprüche

1. Leistungsumwandlungsvorrichtung (1), umfassend:
einen Konstantspannungsausgabe-Schaltkreis (20), der eine konstante Spannung ausgibt,
einen Schaltelementsteuerungs-Schaltkreis (21), der basierend auf der konstanten Spannung, die von dem Konstantspannungsausgabe-Schaltkreis (20) durch Leistungszuführungsleitungen und Steuerschaltelemente (210) angelegt wird, zum Durchführen von Leistungsumwandlung ansteuert,
ein Diodenelement (DO), das in einer Vorwärtsrichtung von dem Konstantspannungsausgabe-Schaltkreis (20) zu dem Schaltelementsteuerungs-Schaltkreis (21) in den Leistungszuführungsleitungen verbunden ist, und
einen Kondensator (CO), dessen eines Ende zwischen dem Diodenelement und dem Schaltelementsteuerungs-Schaltkreis (21) in den Leistungszuführungsleitungen verbunden ist, und dessen anderes Ende mit Masse verbunden ist,
**dadurch gekennzeichnet, dass**
der Konstantspannungsausgabe-Schaltkreis (20) mit einer Konstantspannungsregeldiode (D4) verbunden ist, die ein Diodenelement ist, das dieselben Eigenschaften wie das Diodenelement (DO) in mit Masse verbundener Verdrahtung aufweist.

2. Leistungsumwandlungsvorrichtung nach Anspruch 1,
umfassend einen anderen Schaltelementsteuerungs-Schaltkreis (22), und
wobei jeder aus der Vielzahl der Schaltelementsteuerungs-Schaltkreise (21, 22) das Diodenelement (DO) umfasst, das mit den Leistungszuführungsleitungen verbunden ist, die von dem Konstantspannungsausgabe-Schaltkreis (20) mit jedem aus der Vielzahl der Schaltelementsteuerungs-Schaltkreise (21, 22) verbunden sind.

3. Leistungsumwandlungsvorrichtung nach Anspruch 1 oder 2,
wobei das Diodenelement auch zwischen dem Konstantspannungsausgabe-Schaltkreis (20) und den Schaltelementen verbunden ist, an die die konstante Spannung in einem Fall angelegt wird, in dem die konstante Spannung von dem Konstantspannungsausgabe-Schaltkreis (20) durch die Leistungszuführungsleitungen an die Schaltelemente angelegt wird.

4. Klimaanlage, umfassend:
die Leistungsumwandlungsvorrichtung nach einem der Ansprüche 1 bis 3.

## Revendications

1. Dispositif de conversion de puissance (1) comprenant :
un circuit de sortie de tension constante (20) qui fournit en sortie une tension constante ;
un circuit de commande d'éléments de commutation (21) qui commande sur la base de la tension constante appliquée à partir du circuit de sortie de tension constante (20), à travers des lignes d'alimentation électrique et des éléments de commutation de commande (210), pour mettre en oeuvre une conversion de puissance ;
un élément de diode (DO) qui est connecté dans une direction vers l'avant, du circuit de sortie de tension constante (20) au circuit de commande d'éléments de commutation (21) dans les lignes d'alimentation électrique ; et
un condensateur (CO) présentant une extrémité connectée entre l'élément de diode et le circuit de commande d'éléments de commutation (21) dans les lignes d'alimentation électrique, et l'autre extrémité connectée à une masse ;
**caractérisé en ce que** le circuit de sortie de tension constante (20) est connecté à une diode de régulation de tension constante (D4) qui correspond à un élément de diode présentant les mêmes caractéristiques que celles de l'élément de diode (DO) dont le câblage est connecté à la masse.

2. Dispositif de conversion de puissance selon la revendication 1,
comprenant un autre circuit de commande d'éléments de commutation (22), et
dans lequel chaque circuit de la pluralité des circuits de commande d'éléments de commutation (21, 22) inclut l'élément de diode (DO) qui est connecté aux lignes d'alimentation électrique connectées depuis le circuit de sortie de tension constante (20) à chaque circuit de la pluralité des circuits de commande d'éléments de commutation (21, 22).

3. Dispositif de conversion de puissance selon la revendication 1 ou 2,
dans lequel l'élément de diode est également connecté entre le circuit de sortie de tension constante (20) et les éléments de commutation auxquels la tension constante est appliquée, dans un cas dans lequel la tension constante est appliquée aux éléments de commutation à partir du circuit de sortie de tension constante (20) à travers les lignes d'alimentation électrique.

4. Conditionneur d'air comprenant :
le dispositif de conversion de puissance selon l'une quelconque des revendications 1 à 3.
